# EUROPÄISCHE PATENTSCHRIFT

(11) **EP 1 825 742 B1**
(45) Veröffentlichungstag und Bekanntmachung des Hinweises auf die Patenterteilung: **30.05.2012**
(21) Anmeldenummer: 07100416.2
(22) Anmeldetag: 11.01.2007
(51) Int. Cl.: A01F 25/18

(54) **Verfahren und Vorrichtung zum Verdichten von abgeerntetem Erntegut zur Silageerzeugung**
Method and device for compacting harvested crops for silage production
Procédé et dispositif destinés à compacter des biens récoltés pour l'ensilage

(30) Priorität: 28.02.2006 DE 102006009573
(43) Veröffentlichungstag der Anmeldung: 29.08.2007
(73) Patentinhaber: CLAAS Selbstfahrende Erntemaschinen GmbH, 33428 Harsewinkel (DE)
(72) Erfinder: Haffert, Andreas Dr., 33334 Gütersloh (DE); Degen, Peter Dr., 48336 Sassenberg (DE)

(56) Entgegenhaltungen:
- DE-A1- 3 512 040
- DE-A1- 4 432 823
- DE-A1- 10 242 498
- DE-U- 7 532 909

## Beschreibung

Die Erfindung betrifft ein Verfahren und eine Vorrichtung zum Verdichtung von abgeerntetem Erntegut zur Erzeugung einer Silage in einem Fahr- oder Flachsilo nach dem Oberbegriff der Patentansprüche 1 und 6,

Bei der Stabilität einer Silage spielt insbesondere die Verdichtung des aufgelagerten Erntegutes eine wichtige Rolle Wird beim Siloaufbau das neu geschnittene Erntegut nicht permanent und gewissenhaft verdichtet, wird Restsauerstoff in den einzelnen aufgetragenen Erntegutlagen eingeschlossen, welches letztendlich zur Bildung von unerwünschten Organismen wie Hefen und Pilzen und zu Fehlgarungen führen kann, was wiederum den Nährwertgehalt der Silage erheblich mindern kann,

Bereits in der DE 75 32 909 U ist eine Vorrichtung und ein Verfahren zum Verdichten von in Einzellagen abgelegtem Grünfutter zur Erzeugung von Silage in einem Fahr- oder Flachsilo gezeigt Zur gleichmäßigen Verdichtung des Grünfutters ist dabei in einem deichselartigen Rahmen eine Walze, gelagert, deren Laufachse als Welle ausgebildet ist, auf der verstellbare Unwuchtkörper angeordnet sind. Durch ein der Welle zugeordnetes Antriebsorgan wird die Laufachse bzw, die Welle des Walzenkörpers auf hohe Drehzahl gebracht, wodurch insgesamt der Walzenkörper in Schwingungen versetzt wird, Beim Fahren über die einzelnen abgelegten Erntegutlagen werden dann die Schwingungen von der Walze auf das Grünfutter überragen, wodurch eine überwiegend vertikale Verdichtung des Grünfutters bewirkt wird.
Nachteilig an dieser Ausführung ist, dass trotz der bewirkten Verdichtung der abgelegten Erntegutlagen, durch das unterschiedlich auftretende Rückfederungspotential des Erntegutes weiterhin Hohlräume mit Sauerstoff bestehen bleiben können, was wiederum die bereits beschriebenen Nachteile bewirkt. Dadurch, dass das in Einzellagen abgelegte Erntegut zudem Täler und Höhen aufweisen kann, kann aufgrund der vorgegebenen Walzenbreite und der annähernd senkrechten Verdichtung nicht sichergestellt werden, dass diese beim Walzvorgang geschlossen werden, so dass bei der Ablage der jeweils nächsten Erntegutlage wiederum Höhlräume bestehen bleiben können. Zudem schiebt die Walze dadurch, dass sie um ihre Längsachse antreibbar ist, das zu verdichtende Erntegut aus dem eigentlichen Verdichtungsbereich heraus.

Darüber hinaus offenbart die DE 44 32 823 A1 eine Vorrichtung zur Verwendung bei Flachsilos, die zwei rotierende Verteilerelemeiite aufweist, Dabei liegt die Vorrichtung zumindest mit ihrer Unterseite auf dem Verteilgut auf, wobei durch die rotierend angetriebenen Verteiler das Verteilgut im Flachsilo verteilt wird. Nachteilig ist jedoch bei dieser Ausführung, dass zwar eine Verteilung des Verteilgutes erfolgt, nicht jedoch dessen Verdichtung.

Der vorliegenden Erfindung liegt daher die Aufgabe zugrunde, die im Stand der Technik beschriebenen Nachteile zu vermeiden und insbesondere ein Verdichtungsverfahren und eine Verdichtungsvorrichtung zu schaffen, wodurch eine flächendeckend gleichmäßige und gegenüber dem Stand der Technik erhöhte Verdichtung des in einem Fahr- oder Flachsilo in Einzellagen abgelegten Erntegut zur Erzeugung einer Silage sichergestellt ist

Erfindungsgemäß wird die Aufgabe durch ein Verdichtungsverfahren und eine Verdichtungsvorrichtung mit den kennzeichnenden Merkmalen der Patentansprüche 1 und 6 gelöst

indem das in Einzellagen abgelegte Erntegut durch eine Verdichtungsvorrichtung verdicht wird, wobei die Verdichtungsvorrichtung die Erntegutmenge belastet und sich relativ zu dieser bewegt, wird vorteilhaft eine flächendeckend gleichmäßige und ausreichende Verdichtung des zu silierenden Erntegutes sichergestellt, da das Siliergut nicht nur in vertikaler Richtung verdichtet, sondern durch die Relativbewegutig auch gegeneinander verschoben wird,

vorteilhafter Ausgestaltung der Erfindung ist vorgesehen, dass die Belastung und die Relativbewegung der Verdicbiungsvornchtung auf das abgelegte Erntegut zeitgleich erfolgt, so dass in einem Arbeitsgang das Erntegut verdichtet wird und gleichzeitig Hohlräume im Silo geschlossen werden können, so dass ein unerwünschter Sauerstoffeinschluss in der Silage verhindert wird.

Als besonders praxistauglich erweist sich das erfindungsgemäße Verfahren, wenn die Belastung als vertikale Kraft und die Relativbewegung als Drehbewegung oder oszillierende Bewegung erfolgt. Dadurch wird ein Schub-Drucl-Effekt erzielt der zu einer höheren Verdichtung des abgelegten Erntegutes führt, als dies bislang durch im Stand der Technik bekannte Verdichtungsverfahren erreicht wurde.

Indem in Abhängigkeit von der zu silierenden Erntegutart und/oder deren Ernteguteigenschaft die Belastungswirkung und die Relativbewegung der Verdichtungsvorrichtung einstellbar ist, kann vorteilhaft permanent eine optimale und ausreichende Verdichtung des im Silo abgelegten Erntegut erreicht werden. Das ist deshalb von besonderer Bedeutung, da dass Verdichtungsverhalten vor allem stark von der Feuchte des zu verdichtenden Gutes abhängt.

In einer weiteren vorteilhaften Ausgestaltung der Erfindung, wird dem Bediener der landwirtschaftlichen Arbeitsmaschine, welche die Verdtchtungsvorrichtung aufnimmt, vor der Anlieferung des zu silierenden Erntegutes die Erntegutart und/oder Ernteguteigenschaft mitgeteilt, wobei der Bediener anhand dieser Mitteilung die Verdichtungsvorrichtung einstellen kann, so dass ohne Zeitverlust die optimale Verdichtung der Silage erfolgen kann.

Nach der Erfindung ist die Vorrichtung zur Verdichtung von im Silo abgelegtem Erntegut so ausgebildet, dass sie einen Tragrahmen umfasst, der untenseitig ein oder mehrere Verdichtungselemente aufnimmt und wobei jedem Verdichtungselement eine Vielzahl von Koritaktfiächen zugeordnet sind und das oder die Verdichtungselemente eine vertikale Kraft erzeugen und eine Relativbewegung ausführen können. Mit dieser Ausführung kann auf konstruktiv einfache Weise das Verdichtungsverfahren zur Silageerzeugung in einem Fahr- oder Flachsilo genutzt werden,

Indem das oder die Verdichtungselemente kalottenförmig ausgebildet sind und auf ihrer Oberfläche, eine Vielzahl von geriffelten Kontaktflächen aufweisen, entstehen durch deren rotierende Einwirkung auf das Erntegut besonders hohe Scherkräfte, so dass durch die dadurch eintretende Erntegutverteilwirkung während des Verdichtungsvorganges sich im Silo befindende Höhlräume geschlossen werden können

Dadurch, dass das oder die Verdichtungselemente als Rotor ausgeführt sind und wobei die einzelnen Rotorblätter in Drehrichtung in vertikaler Richtung gewölbt ausgebildet sind, kann aufgrund der größeren Auflagefläche der eitizelnen Rotorblätter vorteilhaft ein durch die wirkenden Scherkräfte auftretender Musseffekt verringert werden.

In einer vorteilhaften Weiterbildung der Erfindung sind die Verdichtungselemente über Antriebswellen in einen Antriebsstrang integriert und über Antriebswellen rotierend antreibbar, wobei vorteilhaft der Antriebsstrang in den vorhandenen Tragrahmen der Verdichtungsvorrichtung integriert ist. So kann auf konstruktiv einfache Weise die Rotationsbewegung der Verdichtungselemente erreicht werden, wodurch dann mit Einwirken der Verdichtungselemente auf das Erntegut die gewünschten Scherkräfte entstehen.

Indem das Antriebsorgan des oder der Verdichtungselemente mit der Zapfwelle einer landwirtschaftlichen Arbeitsmaschine antriebsmäßig verbunden ist, ist der Antrieb auf einfache Weise an die ohnehin vorhandene Zapfwelle koppelbar.

Dadurch, dass der Tragrahmen Anlenkpunkte für den Anbau an die Dreipunkt-Hydraulik einer landwirtschaftlichen Arbeitsmaschine aufweist und über den Betrieb des Dreipunktanbaus die vertikale Kraft der Verdichtungselemente variierbar ist, kann durch einfaches Heben und Senken der Dreipunkt-Hydraulik die Verdichtungsvorrichtung in Arbeits- bzw. Transportstellung gebracht und eine variable Druckbeaufschlagung der Verdichtungselemente erreicht werden,

Indem dem Tragrahmen obenseitig ein zusätzliches Gewichtselement zugeordnet ist, kann neben der Druckbeaufschlagung durch die Dreipunkt-Hydraulik eine zusätzliche auf das zu silierende Erntegut einwirkende Verdichtungskraft durch die Verdichtungselemente sichergestellt werden. Eine besonders variable Verdichtungswirkung der Verdichtungseiernente ist dann erreichbar,wenn das Gewichtselement sich aus einzelnen Schichtgewichten zusammensetzt

In einer vorteilhaften Weiterbildung der Erfindung können sich vor der Verdichtungsvorrichtung ergebende Erntegutaufstauungen dann besonders effektiv verhindert werden, wenn der Verdichtungseinrichtung frontseitig eine zusätzliche Erntegutverteilvorrichtung zugeordnet ist.

In einer vorteilhaften Ausgestaltung der Erfindung kann die Drehrichtung und/oder die Drehzahl der Verdichtungselemente änderbar sein und zwischen den Verdichtungselementen der Verdichtungsvorrichtung variieren kann. Dies hat insbesondere den Vorteil, dass der Verdichtungseffekt noch spezifischer auf verschiedene Erntegutarten und deren Eigenschaften eingestellt werden kann,

Zudem können die Rotationsachsen der Verdichtungselemente gegeneinander geneigt sein und/oder die Verdichtungselemente in vertikaler Richtung zueinander verschoben sein, Auf diese Weise wird es möglich, dass die Verdschtungsvorrichtung besser auf Schichthöhenschwankungen der in das Fahrsilo eingebrachten Erntegutmengen reagieren kann.

Weitere vorteilhafte Ausgestaltungen sind Gegenstand weiterer Unteransprüche und werden nachfolgend anhand der Zeichnungen 1 bis 3 näher erläutert.
Es zeigen:
- Figur 1: den Ablauf des Verdichtungsvertahren anhand einer schematischen Darstellung
- Figur 2: die schleppergezogene Verdichtungsvorrichtung in schematischer Seitenansicht
- Figur 3: eine Ausführungsform des Verdichtungselement in schematischer Seitenansicht
- Figur 4: eine weitere Ausführungsform des Verdichtungselementes in schematischer Seitenansicht

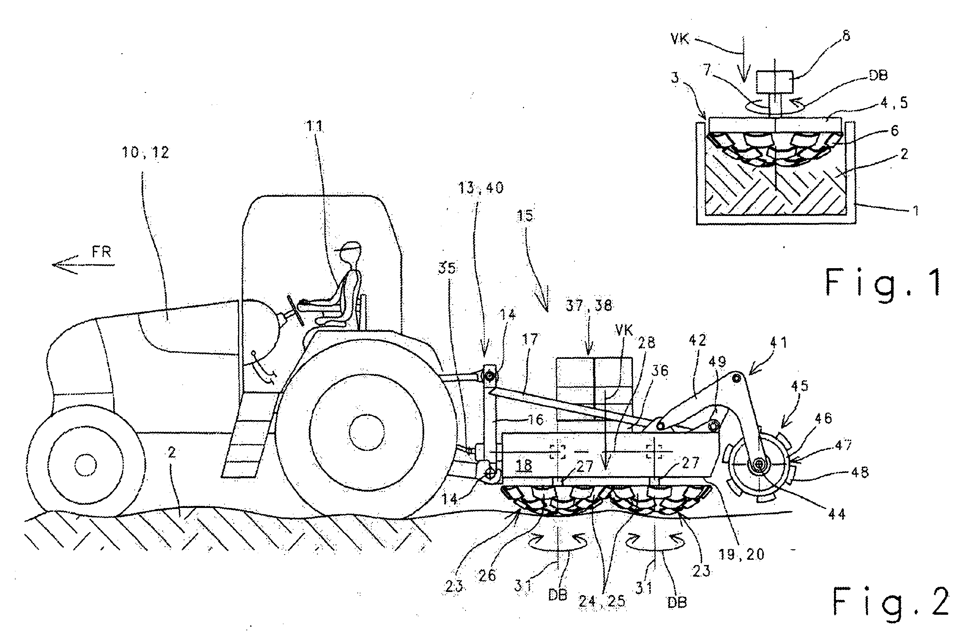

Figur 1 zeigt zur Erklärung des Verdichtungsverfahren anstelle eines Silos irgendein Behältnis 1 welches in Einzellagen abgelegtes Erntegut 2 aufnimmt. Ein der Größe der Behältnisöffnung 3 entsprechendes und als druckbeaufschlagter Press-Dreh-Kolben 4 ausgebildetes Verdichtungselement 5 liegt mit seiner Unterseite auf dem Erntegut 2 innerhalb des Behältnisses 1 auf. An der Unterseite des Press-Dreh-Kolbens 4 befinden sich gewölbte Mitnehmer 6. Zur Ausübung der Drehbewegungen DB ist der Press-Dreh-Kolben 4 drehfest mit einer Antriebswelle 7 verbunden und über ein Getriebe 8 umlaufend antreibbar, Erfindungsgemäß übt der Press-Dreh-Kölben 4 eine vertikale Kraft VK auf das aufgelockert abgelegte Erntegut 2 aus, wobei der Press-Drehkolben 4 gleichzeitig horizontal rotierend mit den gewölbten Mitnehmern 6 eine Scherkraft auf das Erntegut 2 ausübt, wodurch Hohlräume im abgelegten Erntegut 2 geschlossen werden können und eine Verringerung des Rückfederungspotentials des Erntegutes 2 erreicht wird, Dadurch wird eine Optimierung der im Stand der Technik bekannten Verdichtungsverfahren erreicht und eine erhöhte Verdichtung des Erntegutes 2 bewirkt, so dass unerwünschte Sauerstoffeinschlüsse im Silo verhindert werden können,

Figur 2 zeigt die Seitenansicht einer als Traktor 12 ausgeführten landwirtschaftlichen Arbeitsmaschine 10, wobei der Traktor 12 mit seinem heckseitigen Dreipunktanbau 13 über Anlenkpunkte 14 die erfindungsgemäße Verdielitungsvorrichtung 15 aufnimmt, Die Verdichtungsvornchtung 15 dient zur Verdichtung von Grünfutter und dergleichen Siliergut, beispielsweise in einem Fahr- oder Flachsilo und besieht im Wesentlichen aus einem aus Stahlrohr hergestellten Tragrahmen 16, Zur Stabilität sind dem Tragrahmen 16 zwei Querstreben 17 zugeordnet Umfangsseitig ist der Tragrahmen 16 durch im rechten Winkel dazu angeordnete Bleche 18 geschlossen. An der Bodenseite ist der Tragrahmen 16 ebenfalls ganzflächig durch Bleche 19 geschossen, d.h. er bildet dort eine Auflage- oder Gleitfläche 20, Der Verdichtungsvorrichtung 11 sind untenseitig beispielhaft zwei versetzt zueinander angeordnetet Verdichtungselemetite 23 zugeordnet, wobei auch mehrere oder weniger Verdichtungselemente 23 vorgesehen sein können. Dabei besteht jedes Verdichtungselement 23 aus einem kalottenförmigen Grundkörper 24 auf dessen Oberfläche 25 geriffelte Mitnehmer 26 vorgesehen sind. Die Verdichtungselemente 23 sind um ihre vertikalen Rotationsachsen 31, die senkrecht zur Auflage- oder Gleitfläche 20 angeordnet sind, umlaufend oder oszillierend antreibbar. Hierfür ist jeder Grundkörper 24 jedes Verdichtungselementes 23 drehfest mit einer Welle 27 verbunden und kann über einen nicht näher beschriebenen Antriebsstrang 28 von der Zapfwelle 35 des Traktors 12 angetrieben werden. Es ist auch denkbar, dass die Rotationsachsen 31 der Verdichtungselemente 23 in ihrer Lage zur Auflage- oder Gleitfläche 20 veränderbar sind. Auf dem Tragrahmen 16 erstreckt sich obenseitig quer zur Fahrtrichtung FR über die Breite der Verdichtungseinrichtung 15 eine fest mit dem Tragrahmen 16 verbundene aus Stahl bestehenden Plattform 36, welche ein aus einzelnen Schichtgewichten 38 bestehendes Gewichtselement 37 aufnimmt. Durch dieses Gewichtselement 37 übt die Verdichtungsvorrichtung 15 neben seinem Eigengewicht und den Möglichkeiten des Dreipunktanbaus eine vertikale Kraft VK auf das abgelegte Erntegut 2 aus. Aufgrund der Verwendung von Schichtgewichten 38 kann, angepasst an die unterschiedlichen zu sparenden Erntegutarten, der durch die Verdichtungsvorrichtung 15 ausgeübte vertikale Kraft VK, variiert werden. Ober die Dreipunkt-Hydraulik 40 des Traktors 12 kann die Verdichtungsvorrichtung 15 in Arbeits- bzw. Transportstellung gebracht werden, Gleichzeitig kann dadurch die Verdichtungsvorrichtung 15 druckbeaufschlagt werden. Denkbar ist zudem, die Neigung der Verdichtungsvorrichtung 15 in Bezug auf das abgelegte Erntegut 2 über die Dreipunkt-Hydraulik 40 des Traktors 12 zu variieren, um dadurch Aufstauungen von Erntegut 2 vor der Verdichtungsvorrichtung 15 und damit ein Einfahren der Verdichtungsvorrichtung 15 in das abgelegte Erntegut 2 zu vermeiden. An der dem Traktor 12 abgewandten Seite der Verdichtungsvorrichtung 15 ist dieser eine an sich bekannte Erntegutverteilvorrichtung 41 zugeordnet, Die Erntegutverteilvorrichtung 4.1 weist ihrerseits zwei Tragarme 42 auf, die drehbar mit dem Tragrahmen 16 der Verdichtungsvorrichtung 15 verbunden sind. An ihren unteren Enden nehmen die Tragarme 42 ein um eine horizontal umlaufenden Achse 44 antreibbares Verteilelement 45 auf, Das Verteilelement 45 besteht aus einem Walzenkörper 46 an dessen Oberfläche 47 in radialer Richtung weisende Gutverteiler 48 angeordnet sind, Das umlaufend antreibbare Verteilelement 45 bewirkt eine Verteilung des sich vor der Verdichtungsvorrichtung 15 aufstauenden Erntegutes 2 auf dem Silo. Zur Höheneinstellung der Erntegutverteilvorrichtung 41 sind den Tragarmen 42 Hubzylinder 49 zugeordnet, die gelenkig mit dem Tragrahmen 16 der Verdichtungsvorrichtung 15 verbunden sind. Ein effektiver Einsatz der Verdichtungsvorrichtung 15 kann dann erreicht werden, wenn dem Traktor 12 front- und rückseitig sowie seitlich jeweils eine Verdichtungsvorrichtung 15 zugeordnet wird, wodurch insbesondere große Siloflächen schneller verdichtet werden können, Um eine optimal Verdichtung des Erntegutes 2 zu erreichen, ist es zudem zweckmäßig, dass in Abhängigkeit von der zu silierenden Erntegutart und/oder deren Ernteguteigenschaft die Wirkung der vertikalen Kraft VK der Verdichtungsvorrichtung 15 und die Drehbewegung DB der einzelnen Verdichtungselemente 23 einstellbar sind. Denkbar ist, dass die Erntegutart und/oder deren Ernteguteigenschaft dem Bediener 11 des Traktors 12 vor Anlieferung des zu silierenden Erntegutes 2 mitgeteilt wird, zwecks optimaler Einstellung der Verdichtungsvon-ichtung 15, Dabei kann die Optimierung der Einstellung der Verdichtungsvorrichtung 15 die Änderung der Drehrichtung und der Drehzahl der Verdichtungselemente 23, den Wechsel zwischen umlaufender auf oszillierende Bewegung der Verdichtungselemente und die Anpassung der Ballastierung sowie die Steuerung der Dreipunkt-Hydraulik 40 umfassen, Zum Verdichten des Erntegutes 2 liegt die Verdichtungsvorrichtung 15 mit derAufSage- oder Gleitfläche 20 auf dem abgelegten Erntegut 2 auf und übt aufgrund des Gewichtselementes 37 und/oder der Dreipurikt-Hydraulik 40 einen vertikalen Druck VK auf das Erntegut 2 aus, während dann die einzelnen rotierenden Verdichtungselemente 23 um ihre vertikale Rotationsachse 31 mit den ihnen zugeordneten geriffelten Mitnehmern 26 durch die auftretenden Scherkräfte ein ineinanderschieben des zu verdichtenden Erntegutes 2 bewirken und damit das Schließen von unerwünschten Hohlräumen im Silo bewirken.

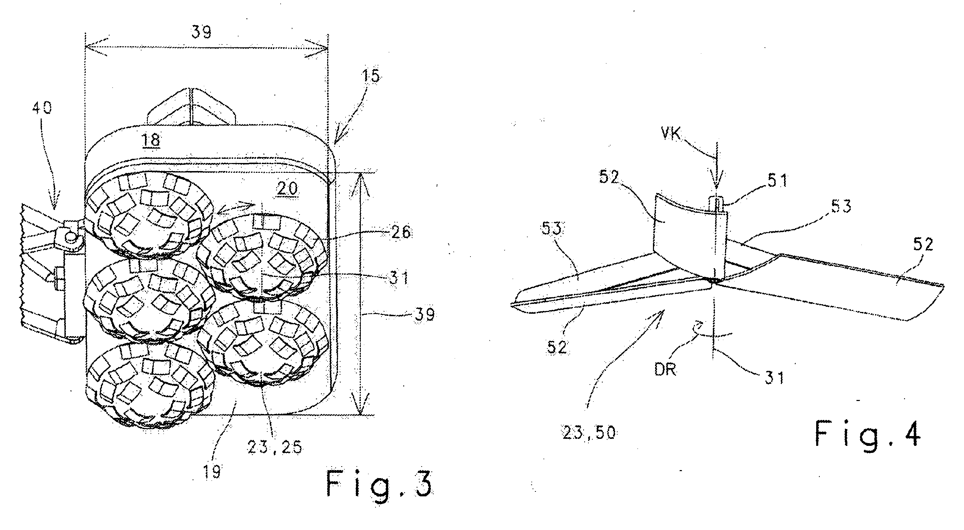

Figur 3 zeigt die bereits in Figur 2 näher beschriebene effindungsgernäße Verdichtungsvornchtung 15 in einer schematischen Seitenansicht von schräg unten. Der Verdichtungseinrichtung 15 sind nun untenseitig auf der Auflage- oder Gleitfläche 20 eine Vielzahl kalottenförmiger Verdichtungselemente 23 zugeordnet, an deren Oberfläche 25 wiederum eine Vielzahl von geriffelten Mitnehmern 26 angeordnet sind, Diese Verdichtungselemente 23 sind versetzt zueinander angeordnet und geben die Arbeitsbreite 39 der Verdichtungsvorrichtung vor, wobei die Arbeitsbreite 39 über die umfangsseitig vorhandenen Bleche 18, 19 hinausgehen kann. Die Verdichtungselemente 23 sind wiederum um ihre vertikale Rotationsachse 31 senkrecht zur Auflage- oder Gleitfläche 20 umlaufend über einen an sich bekannten und deshalb nicht näher dargestellten Antriebsstrang 28 antreibbar. Dadurch, dass die Verdichtungselemente 23 versetzt zueinander angeordnet sind, wird das abgelegte Erntegut 2 über die gesamte Arbeitsbreite 39 einerseits verdichtet, zugleich wird über die auftretenden Scherkräfte der Verdichtungselemente 23, ein Schließen der Silagehohlräume bewirkt.

Figur 4 zeigt ein einzelnes druckbeaufschlagtes Verdichtungselementes 23 in Form eines Rotorelementes 50, in einer Seitenansicht von unten, welches anstelle des kalottenförmig ausgebildeten Verdichtutigselernentes 23 der Figur 2 zum Einsatz an der Verdichtungsvorrichtung 15 kommen kann. Dabei besteht das Rotorelement 50 aus einer Rotorwelle 51, der beispielhaft drei Rotorblätter 52 zugeordnet sind. Das Rotorelement 50 an sich ist um seine vertikale Achse über eine nicht dargestellte Welle und einen nicht dargestellten Antriebsstrang umlaufend antreibbar. Zur Stabilität sind den Rotorblättern 52 obenseitig Querstreben 53 zugeordnet, die sich von der Rotorwelle 51 bis zu den Enden der Rotorblätter 52 erstrecken. Während des Verdichtungsvorgangs entstehen durch die Rotationsbewegung der Rotorblätter 52 auf das Erntegut einwirkende Scherkräfte, die gleichfalls ein Schließen von Hohlräumen im Silo bewirken, wodurch eine optimale flächendeckende Silageverdichtung erreicht werden kann.

Um den Verdtchtungsefrekt der Verdichtungselemente weiter zu erhöhen oder sehr flexibel an unterschiedliches Erntegut anpassen zu können, kann in einer vorteilhaften Ausgestaltung der Erfindung vorgesehen sein, dass die Verdichtungselemerite 23 der Verdtchtungsvornchtung 15 jeweils einzeln oder in Gruppen mit unterschiedlichen Drehzahlen betrieben werden. Zudem kann zur bessern Anpassung an das in der Regel in vertikaler Richtung sehr ungleichmäßig verteilte Erntegut vorgesehen sein, dass die Achsen 31 der Verdichtungselemente 23 gegeneinander geneigt oder die Verdichtungselemente 23 vertikal verschoben an der Verdichtungsvorrichtung 15 angeordnet sind.

### Bezugszeichenliste

- 1: Behältnis
- 2: Erntegut
- 3: Behältnisöffnung
- 4: Press-Dreh-Kolben
- 5: Verdichtungselement
- 6: Gewölbte Mitnehmer
- 7: Antriebswelle
- 8: Getriebe
- 9:
- 10: landwirtschaftliche Arbeitsmaschine
- 11: Bediener
- 12: Traktor
- 13: Dreipunktanbau
- 14: Anlenkpunkte
- 15: Verdichtungsvorrichtung
- 16: Tragrahmen
- 17: Querstreben
- 18: Bleche
- 19: Bleche
- 20: Auflage- oder Gleitfläche
- 21:
- 22:
- 23: Verdichtuiagselement
- 24: Grundkörper
- 25: Oberfläche
- 26: geriffelte Mitnehmer
- 27: Welle
- 28: Antriebsstrang
- 29:
- 30:
- 31: Rotationsachse
- 32:
- 33:
- 34:
- 35: Zapfwelle
- 36: Plattform
- 37: Gewichtselement
- 38: Schichtgewichte
- 39: Arbeitsbreite
- 40: Dreipunkt-Hydraulik
- 41: ErntegLttverteitvömchturig
- 42: Tragarm
- 43:
- 44: Achse
- 45: Verteilelement
- 46: Walzenkörper
- 47: Oberfläche
- 48: Gutverteiler
- 49: Hubzylinder
- 50: Rotorelement
- 51: Rotorwelle
- 52: Rotorblatt
- 53: Querstrebe

- DB: Drehbewegung
- VK: Vertikale Kraft
- FR: Fahrtrichtung

## Patentansprüche

1. Verfahren zur Verdichtung von in Einzellagen abgelegtem Erntegut (2) zum Zweck der Erzeugung von Silage in einem Fahr- oder Flachsilo, unter Verwendung einer landwirtschaftlichen Arbeitsmaschine, wobei die landwirtschaftliche Arbeitsmaschine eine Verdichtungsvorrichtung (15) aufnimmt,
**dadurch gekennzeichnet,**
**dass** das in Einzellagen abgelegte Erntegut (2) durch zumindest ein Verdichtungselement (23, 50) verdicht wird und wobei das zumindest eine Verdichtungselement (23, 50) die Erntegutmenge (2) belastet und sich relativ zu dieser bewegt und die Verdichtungsvorrichtung (15) einen Tragrahmen (16) umfasst, der untenseitig ein oder mehrere um eine vertikale Achse rotierende Verdichtungselemente (23 ,50) aufnimmt und wobei jedem Verdichtungselement (25,50) eine Vielzahl von Mitnehmem (26) zugeordnet ist und das oder die Verdichtungselemente (23, 50) eine vertikale Kraft (VK) erzeugen und eine Relativbewegung ausführen können.

2. Verfahren zur Verdichtung nach anspruch 1,
**dadurch gekennzeichnet,**
**dass** das zumindest eine Verdichtungselement (23, 50) die Erntegutmenge zeitgleich belastet und sich relativ zu dieser bewegt.

3. Verfahren zur Verdichtung nach einem der vorhergehenden Anspruche,
**dadurch gekennzeichnet,**
**dass** die Belastung des Erntegutes (2) als vertikale Kraft (VK) und die Relativbewegung als Drehbewegung (D8) oder als oszillierende Bewegung erfolgt.

4. Verfahren zur Verdichtung nach einem der vorhergehenden Ansprüche,
**dadurch gekennzeichnet,**
**dass** in Abhängigkeit von der zu silierenden Erntegutart und/oder deren Ernteguteigenschaft die Belastung und die Relativbewegung des zumindest einen Verdichtungselementes (23; 50) einstellbar ist.

5. Verfahren zur Verdichtung nach einem der vorergehenden Ansprüche,
**dadurch gekennzeichnet,**
**dass** der Bediener (11) der landwirtschaftlichen Arbeitsmaschine (10), welche die Verdichtungsvorrichtung (15) aufnimmt, vor der Anlieferung des zu silierenden Erntegutes (2), die Erntegutart und/oder Ernteguteigenschaft mitgeteilt bekommt, wobei der Bediener (11) anhand dieser Mitteilung die Wirkung der Verdichtungsvorrichtung (15) einstellen kann.

6. Vorrichtung zum Verdichten von in Einzellagen abgelegtem Erntegut (2) zur Silageerzeugung in einem Fahr- oder Flachsilo, unter Verwendung einer landwirtschaftlichen Arbeitsmaschine (10), wobei die landwirtschäftliche Arbeitsmaschine (10) die Verdichtungsvorrichtung (15) aufnimmt,
**dadurch gekennzeichnet,**
**dass** die Verdichtungsvorrichtung (15) einen Tragrahmen (16) umfasst; der untenseitig ein oder mehrere um eine vertikale Achse rotierende \/erdichtungselemente (23, 50) aufnimmt und wobei jedem Verdichtungselement (23, 50) eine Vielzahl von Mitnehmern (26) zugeordnet ist und das oder die Verdichtungselemente (23, 50) eine vertikale Kraft (VK) erzeugen und eine Relativbewegung ausführen können.

7. Vorrichtchtung zum Verdichten nach Anspruch 6,
**dadurch gekennzeichnet,**
**dass** das Verdichtungselement (23) kalottenförmig ausgebildet ist und auf seiner Oberfläche eine Vielzahl von geriffelten Mitnehmer (26) aufweist.

8. Vorrichtung zum Verdichten nach Anspruch 6 oder 7,
**dadurch gekennzeichnet,**
**dass** das Verdichtungselement (50) als Rotor ausgeführt ist und wobei die einzelnen Rotorblätter (52) in Drehrichtung vertikal gewölbt ausgebildet sind.

9. Vorrichtung zum Verdichten nach einem der Ansprüche 6 bis 8,
**dadurch gekennzeichnet,**
**dass** die Verdichtungselemente (23, 50) über Antriebswellen (7) in einen Antriebsstrang (28) integriert sind und die Verdichtungselemente (23, 50) über die Antriebswellen (7) rotierend antreibbar sind.

10. Vorrichtung zum Verdichten nach einem der Ansprüche 6 bis 9,
**dadurch gekennzeichnet,**
**dass** der Antriebsstrang (28) in den Tragrahmen (16) der Verdichtungsvorrichtung (15) integriert ist.

11. Vorrichtung zum Verdichten nach einem der Ansprüche 6 bis 10,
**dadurch gekennzeichnet,**
**dass** der Antriebsstrang (28) mit der Zapfwelle (35) einer landwirtschaftlichen Arbeitsmaschine (10) antriebsmäßig verbunden ist.

12. Vorrichtung zum Verdichten nach einem der Ansprüche 6 bis 11,
**dadurch gekennzeichnet**
**dass** der Tragrahmen (16) Anlenkpunkte (14) für den Anbau an die Dreipunkt-Hydraulik (40) einer landwirtschaftlichen Arbeitsmaschine (10) aufweist und über den Betrieb des Dreipunktanbaus (13) die vertikale Kraft (VK) der Verdichtungselemente (23, 50) variierbar ist.

13. Vorrichtung zum Verdichten nach einem der Ansprüche 6 bis 12,
**dadurch gekennzeichnet,**
**dass** dem Tragrahmen (16) der Verdichtungsvorrichtung (15) obenseitig ein Gewichtselement (37) zugeordnet ist.

14. Vorrichtung zum Verdichten nach einem der Anspruche 6 bis 13,
**dadurch gekennzeichnet,**
**dass** sich das Gewichtselement (37) aus einzelnen Schichtgewchten (38) zusammensetzt.

15. Vorrichtung zum Verdichten nach einem der Anspruche 6 bis 14,
**dadurch gekennzeichnet,**
**dass** der Verdichtungsvorrichtung (15) eine angetriebene Erntegutverteilvorrichtung (41) zugeordnet ist.

16. Vorrichtung zum Verdichten nach einem der Ansprüche 6 bis 15,
**dadurch gekennzeichnet,**
**dass** die Drehrichtung und/oder die Drehzahl der Verdichtungselemente (23) änderbar ist und zwischen den Verdichtungselementen (23) der Verdichtungsvorrichtung (15) variieren kann.

17. Vorrichtung zum Verdichten nach einem der Ansprüche 6 bis 16,
**dadurch gekennzeichnet,**
**dass** die Rotationsachsen (31) der Verdichtungselemente (23) gegeneinander geneigt sein können und/oder die Verdichtungselemente (23) in vertikaler Richtung zueinander verschoben sind.

## Claims

1. A method of compacting crop material (2) deposited in individual layers for producing silage in a mobile or horizontal silo, using an agricultural working machine, wherein the agricultural working machine carries a compacting device (15),
**characterised in that**
the crop material (2) deposited in individual layers is compacted by at least one compacting element (23, 50) and wherein the at least one compacting element (23, 50) loads the amount of crop material (2) and moves relative thereto and the compacting device (15) includes a carrier frame (16) which at its underside carries one or more compacting elements (23, 50) rotating about a vertical axis and wherein a plurality of entrainment members (26) is associated with each compacting element (23, 50) and the compacting element or elements (23, 50) can produce a vertical force (VK) and perform a relative movement.

2. A compacting method according to claim 1 **characterised in that** the at least one compacting element (23, 50) simultaneously loads the amount of crop material (2) and moves relative to it.

3. A compacting method according to one of the preceding claims **characterised in that** the loading on the crop material (2) is effected as a vertical force (VK) and the relative movement is effected as a rotary movement (DB) or an oscillating movement.

4. A compacting method according to one of the preceding claims **characterised in that** the loading on the crop material and the relative movement of the at least one compacting element (23, 50) is adjustable depending on the type of crop material to be ensilaged and/or the crop material property thereof.

5. A compacting method according to one of the preceding claims **characterised in that** the operator (11) of the agricultural working machine (10) which carries the compacting device (15) is informed about the type of crop material and/or the crop material property before the crop material (2) to be ensilaged is delivered, wherein the operator (11) can adjust the action of the compacting device (15) on the basis of that information.

6. A device for compacting crop material (2) deposited in individual layers for producing silage in a mobile or horizontal silo, using an agricultural working machine (10), wherein the agricultural working machine (10) carries the compacting device (15),
**characterised in that**
the compacting device (15) includes a carrier frame (16) which at its underside carries one or more compacting elements (23, 50) rotating about a vertical axis and wherein a plurality of entrainment members (26) is associated with each compacting element (23, 50) and the compacting element or elements (23, 50) can produce a vertical force (VK) and perform a relative movement.

7. A compacting device according to claim 6 **characterised in that** the compacting element (23) is domed-shaped and has a plurality of knurled entrainment members (28) on its surface.

8. A compacting device according to one of claims 6 and 7 **characterised in that** the compacting element (50) is in the form of a rotor and wherein the individual rotor blades (52) are of a configuration curved vertically in the direction of rotation.

9. A compacting device according to one of claims 6 to 8 **characterised in that** the compacting elements (23, 50) are integrated by way of drive shafts (7) into a drive train (28) and the compacting elements (23, 50) are drivable in rotation by way of the drive shafts (7).

10. A compacting device according to one of claims 6 to 9 **characterised in that** the drive train (28) is integrated in the frame (16) of the compacting device (15).

11. A compacting device according to one of claims 6 to 10 **characterised in that** the drive train (28) is drivingly connected to the power takeoff shaft (35) of an agricultural working machine (10).

12. A compacting device according to one of claims 6 to 11 **characterised in that** the carrier frame (16) includes pivot points (14) for mounting to the three-point hydraulic system (40) of an agricultural working machine (10) and the vertical force (VK) of the compacting elements (23, 50) is variable by way of operation of the three-point attachment (13).

13. A compacting device according to one of claims 6 to 12 **characterised in that** a weight element (37) is associated with the carrier frame (16) of the compacting device (15) at the top.

14. A compacting device according to one of claims 6 to 13 **characterised in that** the weight element (37) is composed of individual layer weights (38).

15. A compacting device according to one of claims 6 to 14 **characterised in that** a driven crop material distribution device (41) is associated with the compacting device (15).

16. A compacting device according to one of claims 6 to 15 **characterised in that** the direction of rotation and/or the speed of rotation of the compacting elements (23) is variable and can vary between the compacting elements (23) of the compacting device (15).

17. A compacting device according to one of claims 6 to 16 **characterised in that** the axes of rotation (31) of the compacting elements (23) can be inclined relative to each other and/or the compacting elements (23) are displaced in a vertical direction relative to each other.

## Revendications

1. Procédé de compactage d'un produit de récolte (2) déposé en couches individuelles en vue de la production d'ensilage dans un silo couloir ou horizontal, à l'aide d'une machine de travail agricole, laquelle machine de travail agricole reçoit un dispositif de compactage (15), **caractérisé en ce que** le produit de récolte (2) déposé en couches individuelles est compacté par au moins un élément de compactage (23, 50), ledit au moins un élément de compactage (23, 50) appliquant une charge à la quantité de produit de récolte (2) et se déplaçant par rapport à celle-ci, le dispositif de compactage (15) comprenant un cadre porteur (16) qui reçoit, du côté inférieur, un ou plusieurs éléments de compactage (23, 50) qui tournent autour d'un axe vertical, une pluralité d'éléments d'entraînement (26) étant associée à chaque élément de compactage (23, 50) et le ou les éléments de compactage (23, 50) générant une force verticale (VK) et pouvant effectuer un mouvement relatif.

2. Procédé de compactage selon la revendication 1, **caractérisé en ce que** ledit au moins un élément de compactage (23, 50) applique une charge à la quantité de produit de récolte et, en même temps, se déplace par rapport à celle-ci.

3. Procédé de compactage selon une des revendications précédentes, **caractérisé en ce que** la charge appliquée au produit de récolte (2) est une force verticale (VK) et le déplacement relatif est un mouvement de rotation (DB) ou un mouvement d'oscillation.

4. Procédé de compactage selon une des revendications précédentes, **caractérisé en ce que** la charge et le déplacement relatif dudit au moins un élément de compactage (23, 50) sont réglables en fonction de la nature du produit de récolte à ensiler et/ou d'une propriété du produit de récolte.

5. Procédé de compactage selon une des revendications précédentes, **caractérisé en ce que** l'opérateur (11) de la machine de travail agricole (10) qui reçoit le dispositif de compactage (15) est informé, avant la livraison du produit de récolte (2) à ensiler, de la nature du produit de récolte et/ou de la propriété du produit de récolte, l'opérateur (11) pouvant, à l'aide de cette information, régler l'action du dispositif de compactage (15).

6. Dispositif de compactage d'un produit de récolte (2) déposé en couches individuelles en vue de la production d'ensilage dans un silo couloir ou horizontal, à l'aide d'une machine de travail agricole (10), laquelle machine de travail agricole (10) reçoit le dispositif de compactage (15), **caractérisé en ce que** le dispositif de compactage (15) comprend un cadre porteur (16) qui reçoit du côté inférieur un ou plusieurs éléments de compactage (23, 50) qui tournent autour d'un axe vertical, une pluralité d'éléments d'entraînement (26) étant associée à chaque élément de compactage (23, 50) et le ou les éléments de compactage (23, 50) générant une force verticale (VK) et pouvant effectuer un mouvement relatif.

7. Dispositif de compactage selon la revendication 6, **caractérisé en ce que** l'élément de compactage (23) est réalisé en forme de calotte et présente sur sa surface une pluralité d'éléments d'entraînements cannelés (26).

8. Dispositif de compactage selon la revendication 6 ou 7, **caractérisé en ce que** l'élément de compactage (50) est réalisé sous la forme d'un rotor et les différentes pales de rotor (52) sont bombées verticalement dans la direction de rotation.

9. Dispositif de compactage selon une des revendications 6 à 8, **caractérisé en ce que** les éléments de compactage (23, 50) sont intégrés dans un système d'entraînement (28) par l'intermédiaire d'arbres d'entraînement (7), et les éléments de compactage (23, 50) peuvent être entraînés en rotation par les arbres d'entraînement (7).

10. Dispositif de compactage selon une des revendications 6 à 9, **caractérisé en ce que** le système d'entraînement (28) est intégré dans le cadre porteur (16) du dispositif de compactage (15).

11. Dispositif de compactage selon une des revendications 6 à 10, **caractérisé en ce que** le système d'entraînement (28) est relié en entraînement avec l'arbre de prise de force (35) d'une machine de travail agricole (10).

12. Dispositif de compactage selon une des revendications 6 à 11, **caractérisé en ce que** le cadre porteur (16) présente des points d'articulation (14) pour le montage au système hydraulique à trois points (40) d'une machine de travail agricole (10), et l'actionnement de l'attelage à trois points (13) permet de faire varier la force verticale (VK) des éléments de compactage (23, 50).

13. Dispositif de compactage selon une des revendications 6 à 12, **caractérisé en ce qu'**un élément formant poids (37) est associé, du côté supérieur, au cadre porteur (16) du dispositif de compactage (15).

14. Dispositif de compactage selon une des revendications 6 à 13, **caractérisé en ce que** l'élément formant poids (37) est composé de poids individuels empilés (38).

15. Dispositif de compactage selon une des revendications 6 à 14, **caractérisé en ce qu'**un dispositif d'épandage de produit de récolte entraîné (41) est associé au dispositif de compactage (15).

16. Dispositif de compactage selon une des revendications 6 à 15, **caractérisé en ce que** le sens de rotation et/ou la vitesse de rotation des éléments de compactage (23) est modifiable et peut varier entre les éléments de compactage (23) du dispositif de compactage (15).

17. Dispositif de compactage selon une des revendications 6 à 16, **caractérisé en ce que** les axes de rotation (31) des éléments de compactage (23) peuvent être inclinés les uns par rapport aux autres et/ou les éléments de compactage (23) sont décalés les uns par rapport aux autres en direction verticale.
